# EUROPEAN PATENT SPECIFICATION

(11) **EP 3 745 252 B1**
(45) Date of publication and mention of the grant of the patent: **25.10.2023**
(21) Application number: 19220031.9
(22) Date of filing: 30.12.2019
(51) Int. Cl.: G06F 3/16, G10L 15/22, G10L 21/0208

(54) **VOICE CONTROL METHOD AND APPARATUS OF ELECTRONIC DEVICE, COMPUTER DEVICE AND STORAGE MEDIUM**
SPRACHSTEUERUNGSVERFAHREN UND -EINRICHTUNG EINER ELEKTRONISCHEN VORRICHTUNG, COMPUTERVORRICHTUNG UND SPEICHERMEDIUM
PROCÉDÉ DE COMMANDE VOCALE ET APPAREIL DE DISPOSITIF ÉLECTRONIQUE, DISPOSITIF INFORMATIQUE ET SUPPORT D'ENREGISTREMENT

(30) Priority: 31.05.2019 CN 201910468935
(43) Date of publication of application: 02.12.2020
(73) Proprietor: Baidu Online Network Technology (Beijing) Co., Ltd., Beijing 100085 (CN); Shanghai Xiaodu Technology Co., Ltd., Shanghai 201210 (CN)
(72) Inventor: Luo, Yongxi, Beijing, 100085 (CN); Wang, Shasha, Beijing, 100085 (CN); Zhang, Gang, Beijing, 100085 (CN)
(74) Representative: advotec.

(56) References cited:
- WO-A1-2018/135753
- US-A1- 2018 322 870

## Description

### FIELD

The present disclosure relates to a field of artificial intelligence technology, and particularly, to a voice control method and apparatus of an electronic device, and a storage medium.

### BACKGROUND

At present, with a rapid development of internet technology and intelligent devices, users can perform a voice interaction with the intelligent devices to meet related requirements, for example, by talking with an intelligent sound box, a requirement of playing music is met.

In the related art, before interacting with an intelligent device, the intelligent device needs to be waked up, that is, before interacting with the intelligent device each time, an operation of wake-up the intelligent device needs to be performed once, and in a working state of the intelligent device, the operation of wake-up the intelligent device can cause the current working state to stop, so that the operation is complicated, and a normal work of the intelligent device is affected.

Further prior art can be found in WO 2018/135753A1, where an electronic apparatus is disclosed. The apparatus comprises a microphone, memory, and a processor functionally connected to the microphone and memory, wherein the processor can be configured so as to: wake-up on the basis of sensing a wake-up word; process a first task corresponding to a first voice command of a user on the basis of the wake-up; configure a wait period during which a follow-up command can be received on the basis of processing of the first task; sense a second voice command of the user during the wait period; analyze the conversational context on the basis of the first voice command and second voice command; and process a second task on the basis of the results of the analysis. A variety of embodiments are possible.

### SUMMARY

The present disclosure aims to solve at least one of the problems existing in the related art to at least some extent.

Accordingly, the present disclosure provides a voice control method according to claim 1, a voice control apparatus of an electronic device according to claim 6, and a non-transitory computer readable storage medium according to claim 10.

### BRIEF DESCRIPTION OF THE DRAWINGS

The above and/or additional aspects and advantages of the present disclosure will become apparent and more readily appreciated from the following descriptions made with reference to the drawings, in which:
FIG 1 is a flow chart illustrating a voice control method of an electronic device according to an embodiment of the present disclosure;
FIG 2 is a flow chart illustrating a voice control method of an electronic device according to another embodiment of the present disclosure;
FIG 3 is a diagram illustrating a display example of an electronic device according to an embodiment of the present disclosure;
FIG 4 is a schematic structural diagram of a voice control apparatus of an electronic device according to an embodiment of the present disclosure;
FIG 5 is a schematic structural diagram of a voice control apparatus of an electronic device according to another embodiment of the present disclosure;
FIG 6 is a schematic structural diagram of a voice control apparatus of an electronic device according to yet another embodiment of the present disclosure;
FIG 7 is a schematic structural diagram of a voice control apparatus of an electronic device according to still another embodiment of the present disclosure; and
FIG 8 is a schematic structural diagram of a computer device according to an embodiment of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

A voice control method and apparatus of an electronic device, a computer device and a storage medium according to embodiments of the present disclosure are described below with reference to the accompanying drawings.

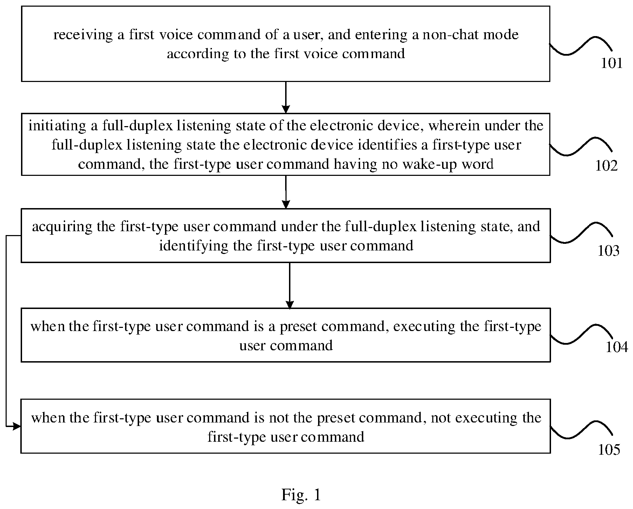

FIG 1 is a flow chart illustrating a voice control method of an electronic device according to an embodiment of the present disclosure.

As illustrated in FIG 1, the voice control method of the electronic device may include the followings.

At step 101, a first voice command of a user is received, and a non-chat mode is entered according to the first voice command.

Specifically, the user may perform a voice interaction with the electronic device, in which the electronic device may be a robot, an intelligent speaker, an intelligent learning machine, and the like, and may be selected as required in practical applications.

In the practical applications, after the user initiates a voice command, the electronic device enters the non-chat mode, such as a music mode, a video mode, an inquiry mode, and the like, the electronic device does not listen to the voice command of the user any more, when the user initiates the voice command again, a preset wake-up word, such as "xiao du, xiao du", is required to wake up the electronic device, at this time, the non-chat mode is suspended, the electronic device listens to and identifies the user command, and responds to the user command after the recognition is completed.

Accordingly, it can be seen that when the user initiates the voice command again, the electronic device needs to be waked up again by the preset wake-up word, a voice cost is high for the user, and the electronic device is not intelligent enough, that is, when the user initiates the voice command again, only one of a speaker and a microphone can be operated, at this time, the speaker is turned off, the non-chat mode is suspended, the microphone is turned on, and the electronic device listens and identifies the user command. Because the speaker is turned off, the user's experience of listening to music and watching video is discontinuous. Whenever the voice command is initiated again, the non-chat mode will be interrupted, which will affect the normal work of the electronic device and lead to a poor experience of using the electronic device.

In view of the above described problems, the present disclosure provides the voice control method of the electronic device, which directly identifies the first-type user command without the wake-up word by initiating a full-duplex listening state of the electronic device after entering the non-chat mode, and executes the first-type user command when the first-type user command is an command related to the non-chat mode, thereby saving the cost of initiating the user command, ensuring that the electronic device plays voice normally, and improving the user experience.

Firstly, the first voice command of the user is received, and the non-chat mode is entered according to the first voice command, the first voice command is like 'bofang Zhou Jielun Qilixiang (play a song named Qilixiang sang by the singer Zhou Jielun)', the electronic device enters a music mode to play the song 'Qilixiang', and then for example, 'dakai xiangce (open an album)', the electronic device opens and displays the album , and it can be understood that when the first voice command of the user is received, the electronic device is in a wake-up state.

At step 102, the full-duplex listening state of the electronic device is initiated, in which, the electronic device identifies the first-type user command under the full-duplex listening state, and the first-type user command has no wake-up word.

At step 103, the first-type user command is acquired under the full-duplex listening state, and the first-type user command is identified.

Specifically, the full-duplex listening state of the electronic device is initiated after entering the non-chat mode, and in order to further improve the user experience, the full-duplex listening state of the electronic device may be initiated within a predetermined time period after entering the non-chat mode, the predetermined time period may be selected according to the practical applications, and is preferably 20 seconds to 40 seconds in consideration of operation habits of the user and energy consumption of the electronic device.

In order to further improve the user experience or enable the user to determine whether the electronic device is currently under the full-duplex listening state, the user may be prompted with a relevant pattern or text on a screen of the electronic device after the full-duplex listening state of the electronic device is initiated, for example, a logo pattern of the electronic device is displayed in color.

The full-duplex listening state of the electronic device is a state in which the speaker and the microphone work simultaneously. After the user initiates the first voice command, the electronic device is under a listening status for a predetermined time period, for example, 30 seconds (at this time, music, video and the like are normally played, and the experience of listening to music, watching video and the like is not affected).

There are many ways to acquire the first-type user command under the full-duplex listening state, examples are described as follows.

In a first example, currently played voice information of the electronic device is acquired, user voice information is separated from current voice information according to the currently played voice information, and the user voice information is identified to acquire the first-type user command.

In a second example, according to a preset input user voiceprint feature, the user voice information corresponding to the user voiceprint feature is directly extracted from the current voice information, and the user voice information is identified to acquire the first-type user command.

It can be understood that, under the full-duplex listening state, the first-type user command not having the wake-up word may be acquired, and the first-type user command is directly identified, and it can be understood that there are many ways to identify the first-type user command. In an example, after the first-type user command is acquired, the first-type user command is converted to text with a voice-text conversion method, and then a word segmentation or a keyword extraction is performed on the first-type user command in a text form, to match in a preset command table, such that the corresponding target command is acquired to complete the identification operation of the first-type user command.

At step 104, when the first-type user command is a preset command, the first-type user command is executed.

At step 105, when the first-type user command is not the preset command, the first-type user command is not executed.

Specifically, a related command, that is, the preset command, is preset as required, the first-type user command may be the preset command or may not be the preset command, for example, the electronic device enters a music mode of playing a song "qilixiang", if it is identified that the first-type user command is "bofang xiayishou (play the next song)" and "zengjia yinliang (increase volume)", or "wo yao yao kan xiaozhupeiqi (I want to watch Peppa pig)" and "dakai xiangce (open the album)" and the like that may be inquired and retrieved in the preset command, the first-type user command may be considered as the preset command and the first-type user command may be executed, and if it is identified that the first-type user command is "nihao, zuijin shangying de dianying XX haokan ma? (Hello, is the recently released movie XX good?)", that may not be retrieved in the preset command, the first-type user command may not be considered as the preset command, the first-type user command is not executed.

It should be noted that, in order to improve a standby ability of the electronic device and meet the operation requirement of the user, the full-duplex listening state is exited after the predetermined time period ends.

According to the voice control method of the electronic device of the embodiments, the first voice command of the user is received and the non-chat mode is entered according to the first voice command; the full-duplex listening state of the electronic device is initiated, under the full-duplex listening state the electronic device identifies the first-type user command, the first-type user command has no wake-up word; the first-type user command is acquired under the full-duplex listening state, and the first-type user command is identified; when the first-type user command is the preset command, the first-type user command is executed; and when the first-type user command is not the preset command, the first-type user command is not executed. The technical problem that the experience of the user for using the electronic device is poor due to the fact that the operation is complex when the user and the electronic device perform the voice interaction and the normal work of the electronic device is affected in the related art is solved, the full-duplex listening state of the electronic device is initiated after the electronic device enters the non-chat mode, the first-type user command without the wake-up word is directly identified and executed when the first-type user command is the preset command, and therefore a cost of initiating the voice command is saved, a normal voice playing of the electronic device is guaranteed, and the use experience of the user is improved.

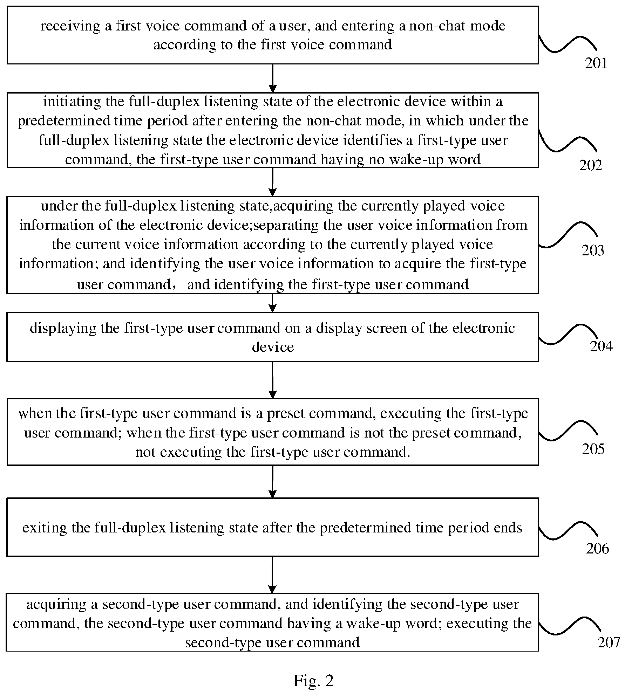

FIG 2 is a flow chart illustrating a voice control method of an electronic device according to another embodiment of the present disclosure;
As illustrated in FIG 2, the voice control method of the electronic device may include the following steps.

At step 201, the first voice command of the user is received, and the non-chat mode is entered according to the first voice command.

It should be noted that step 201 is the same as step 101 of the above embodiment, and the detailed description refers to the description of step 101, which is not elaborated here.

At step 202, the full-duplex listening state of the electronic device is initiated within the predetermined time period after entering the non-chat mode, in which under the full-duplex listening state, the electronic device identifies a first-type user command, the first-type user command has no wake-up word.

In order to further improve the user experience, the full-duplex listening state of the electronic device may be initiated within the predetermined time period after entering the non-chat mode, the predetermined time period may be selected according to the practical applications, and is preferably 20 seconds to 40 seconds in consideration of the operation habits of the user and the energy consumption of the electronic device.

At step 203, under the full-duplex listening state, the currently played voice information of the electronic device is acquired, the user voice information is separated from the current voice information according to the currently played voice information, the user voice information is identified to acquire the first-type user command, and the first-type user command is identified.

It can be understood that, in the full-duplex listening state, the speaker and the microphone are both working, that is, the current voice information received by the microphone includes the sound played by the speaker and the user voice information, so that the user voice information needs to be separated from the current voice information according to the currently played voice information, the user voice information needs to be identified to acquire the first-type user command, and the first-type user command needs to be identified, so as to improve an accuracy of voice recognition.

At step 204, the first-type user command is displayed on a display screen of the electronic device.

Specifically, in order to further improve the user experience, the first-type user command is displayed on the display screen of the electronic device.

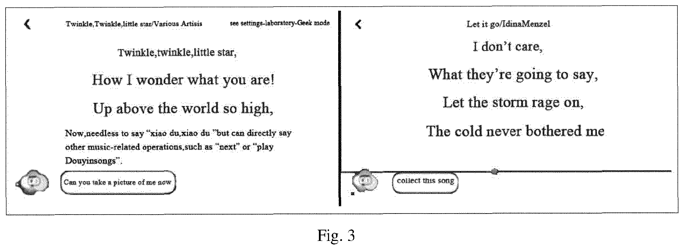

When the first-type user command is a command related to the non-chat mode, the first-type user command is displayed in a first font color, and when the first-type user command is not the command related to the non-chat mode, the first-type user command is displayed in a second font color, the first font color is darker than the second font color. For example, as illustrated in FIG 3, the font turns blue if the first-type user command is related to a music mode, and the font is set to be gray if the first-type user command is not related to the music mode.

In a second example, when the first-type user command is the command related to the non-chat mode, the first-type user command is displayed in a first font size, and when the first-type user command is not the command related to the non-chat mode, the first-type user command is displayed in a second font size, the first font size is larger than the second font size.

It should be noted that, the font is not limited to the color, size and type, but may also be a displaying manner, such as a speed, a position, etc.

At step 205, when the first-type user command is the preset command, the first-type user command is executed; and when the first-type user command is not the preset command, the first-type user command is not executed.

At step 206, the full-duplex listening state is exited after the predetermined time period ends.

Specifically, the related command, that is, the preset command, is preset as required, the first-type user command may be or may not be the preset command, for example, the electronic device enters a music mode to play the song "Qilixiang", if it is identified that the first-type user command is "bofang xiayishou (play the next song)" and "zengjia yinliang (increase volume)", or "wo yao yao kan xiaozhupeiqi (I want to watch Peppa pig)" and "dakai xiangce (open the album)" and the like that may be inquired and retrieved in the preset command, the first-type user command may be considered as the preset command and the first-type user command may be executed, and if it is identified that the first-type user command is "nihao, zuijin shangying de dianying XX haokan ma? (Hello, is the recently released movie XX good?)", that may not be retrieved in the preset command, the first-type user command may not be considered as the preset command, the first-type user command is not executed.

It should be noted that, in order to improve the standby ability of the electronic device and meet the operation requirement of the user, the full-duplex listening state is exited after the predetermined time period ends.

At step 207, a second-type user command is acquired, and the second-type user command is identified, in which the second-type user command has the wake-up word, and the second-type user command is executed.

Specifically, after exiting the full-duplex listening state, only the microphone is working, and thus the second-type user command having the wake-up word is acquired and executed.

Therefore, after the user initiates a voice command, the image mode of the color electronic device is displayed on the screen of the electronic device, the voice command related to the non-chat mode can be directly initiated again, the voice command can be initiated directly when listening to a music, watching a video and the like, such that the cost of initiating the voice command is saved, without interrupting the process of listening to music and watching the video and the like, the experience of listening to the music, watching the video and the like is continuous and complete.

According to the voice control method of the electronic device of the embodiments, the first voice command of the user is received and the non-chat mode is entered according to the first voice command; the full-duplex listening state of the electronic device is initiated, under the full-duplex listening state the electronic device identifies the first-type user command, the first-type user command has no wake-up word; the first-type user command is acquired under the full-duplex listening state, and the first-type user command is identified; when the first-type user command is the preset command, the first-type user command is executed; and when the first-type user command is not the preset command, the first-type user command is not executed. The technical problem that the experience of the user for using the electronic device is poor due to the fact that the operation is complex when the user and the electronic device perform the voice interaction and the normal work of the electronic device is affected in the related art is solved, the full-duplex listening state of the electronic device is initiated after the electronic device enters the non-chat mode, the first-type user command has no wake-up word is directly identified and executed when the first-type user command is the preset command, and therefore the cost of initiating the voice command is saved, the normal voice playing of the electronic device is guaranteed, and the use experience of the user is improved.

In order to implement the above embodiments, the present disclosure further provides a voice control apparatus of the electronic device.

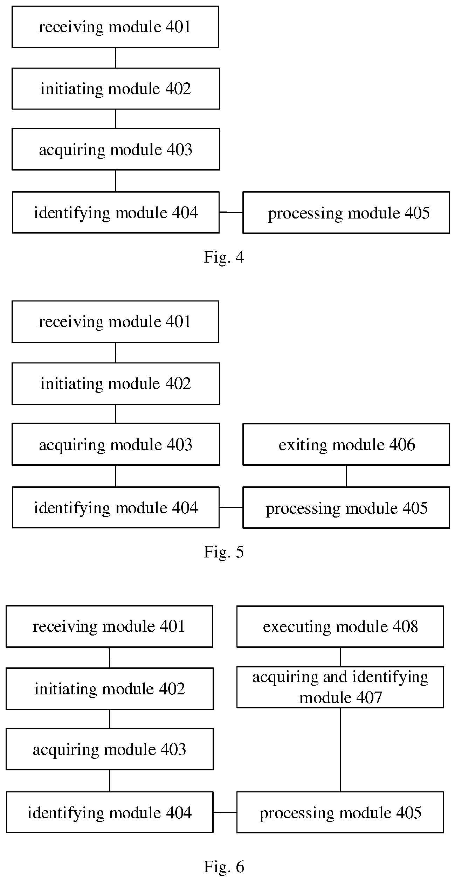

FIG 4 is a schematic structural diagram of a voice control apparatus of an electronic device according to an embodiment of the present disclosure.

As illustrated in FIG 4, the voice control apparatus of the electronic device may include: a receiving module 401, an initiating module 402, an acquiring module 403, an identifying module 404 and a processing module 405.

The receiving module 401 is configured to receive the first voice command of the user and enter the non-chat mode according to the first voice command.

The initiating module 402 is configured to initiate the full-duplex listening state of the electronic device, under the full-duplex listening state the electronic device identifies the first-type user command, the first-type user command has no wake-up word.

The acquiring module 403 is configured to acquire the first-type user command under the full-duplex listening state.

The identifying module 404 is configured to identify the first-type user command.

The processing module 405 is configured to execute the first-type user command when the first-type user command is a preset command.

The processing module 405 is further configured to not execute the first-type user command when the first-type user command is not the preset command.

In a possible implementation of embodiments of the present disclosure, as illustrated in FIG 5, on the basis of FIG 4, the apparatus further includes an exiting module 406.

The initiating module 402 is configured to initiate the full-duplex listening state of the electronic device within the predetermined time period after entering the non-chat mode.

The exiting module 406 is configured to exit the full-duplex listening state after the predetermined time period ends.

In a possible implementation of the embodiment of the present disclosure, as illustrated in FIG 6, on the basis of FIG 4, the method further includes: an acquiring and identifying module 407 and an executing module 408.

The acquiring and identifying module 407 is configured to acquire the second-type user command and identify the second-type user command, in which the second-type user command has the wake-up word.

The executing module 408 is configured to execute the second-type user command.

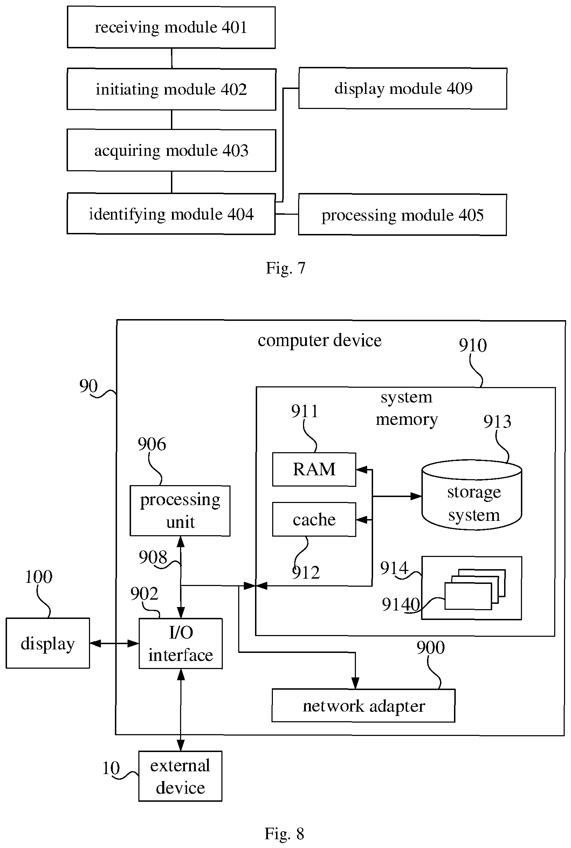

As illustrated in FIG 7, on the basis of FIG 4, the apparatus further includes a display module 409.

A display module 409 is configured to display the first-type user command on the display screen of the electronic device.

The display module 409 is specifically configured to, when the first-type user command is an command related to the non-chat mode, display the first-type user command in a first font color; when the first-type user command is not the command related to the non-chat mode, display the first-type user command in a second font color, the first font color is darker than the second font color.

In a possible implementation of the embodiment of the present disclosure, the acquiring module 403 is specifically configured to collect current voice information, the current voice information includes the user voice information and the currently played voice information; acquire the currently played voice information of the electronic device; separate the user voice information from the current voice information according to the currently played voice information; and identify the user voice information to acquire the first-type user command.

In a possible implementation of the embodiment of the present disclosure, the predetermined time period is 20-40 seconds.

It should be noted that the above explanation of embodiments of the voice control method of the electronic device is also applicable to the voice control apparatus of the electronic device of the embodiments, and the implementation principle is similar, which is not elaborated here.

According to the voice control apparatus of the electronic device of the embodiments, the first voice command of the user is received and the non-chat mode is entered according to the first voice command; the full-duplex listening state of the electronic device is initiated, under the full-duplex listening state the electronic device identifies the first-type user command, the first-type user command has no wake-up word; the first-type user command is acquired under the full-duplex listening state, and the first-type user command is identified; when the first-type user command is the preset command, the first-type user command is executed; and when the first-type user command is not the preset command, the first-type user command is not executed. The technical problem that the experience of the user for using the electronic device is poor due to the fact that the operation is complex when the user and the electronic device perform the voice interaction and the normal work of the electronic device is affected in the related art is solved, the full-duplex listening state of the electronic device is initiated after the electronic device enters the non-chat mode, the first-type user command without the wake-up word is directly identified and executed when the first-type user command is the preset command, and therefore the cost of the user voice initiating command is saved, the normal voice playing of the electronic device is guaranteed, and the use experience of the user is improved.

In order to implement the above embodiments, the present disclosure further provides a computer device, including: a processor and a memory, the processor executes a program corresponding to an executable program code by reading the executable program code stored in the memory for implementing the voice control method of the electronic device according to the above embodiments.

FIG 8 is a schematic structural diagram of a computer device according to an embodiment of the present disclosure, illustrating an exemplary computer device 90 suitable for use in implementing embodiments of the present disclosure. The computer device 90 illustrated in Fig. 8 is merely an example, which should be not understood to limit he functions and usage scope of embodiments of the present disclosure.

As illustrated in Fig. 8, the computer device 90 may be represented via a general computer device form. Components of the computer device 90 may include but be not limited to one or more processors or processing units 906, a system memory 910, a bus 908 connecting various system components including the system memory 910 and the processing units 906.

The bus 908 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (hereinafter referred to as ISA) bus, a Micro Channel Architecture (hereinafter referred to as MAC) bus, an enhanced ISA bus, a Video Electronics Standards Association (hereinafter referred to as VESA) local bus and Peripheral Component Interconnection (PCI) bus.

The computer device 90 typically includes a variety of computer system readable media. These media may be any available media accessible by the computer device 90 and includes both volatile and non-volatile media, removable and non-removable media.

The system memory 910 may include a computer system readable medium in the form of volatile memory, such as a random access memory (hereinafter referred to as RAM) 911 and/or a high speed cache memory 912. The computer device 90 may further include other removable or non-removable, volatile or non-volatile computer system storage media. By way of example only, the storage system 913 may be configured to read and write a non-removable and non-volatile magnetic media (not shown in FIG 8, commonly referred to as a "hard disk driver"). Although not shown in FIG 8, a magnetic disk driver for reading from and writing to a removable and non-volatile magnetic disk (such as "floppy disk") and a disk driver for a removable and non-volatile optical disk (such as compact disk read only memory (hereinafter referred to as CD-ROM), Digital Video Disc Read Only Memory (hereinafter referred to as DVD-ROM) or other optical media) may be provided. In these cases, each driver may be connected to the bus 908 via one or more data medium interfaces. The memory 910 may include at least one program product. The program product has a set (such as, at least one) of program modules configured to perform the functions of various embodiments of the present disclosure.

The computer readable signal medium may include a data signal propagating in baseband or as part of a carrier which carries computer readable program codes. Such propagated data signal may be in many forms, including but not limited to an electromagnetic signal, an optical signal, or any suitable combination thereof. The computer readable signal medium may also be any computer readable medium other than the computer readable storage medium, which may send, propagate, or transport programs used by an instruction executed system, apparatus or device, or a connection thereof.

The program code stored on the computer readable medium may be transmitted using any appropriate medium, including but not limited to wireless, wireline, optical fiber cable, RF, or any suitable combination thereof.

The computer program code for carrying out operations of embodiments of the present disclosure may be written in one or more programming languages. The programming language includes an object oriented programming language, such as Java, Smalltalk, C ++, as well as conventional procedural programming language, such as "C" language or similar programming language. The program code may be executed entirely on a user's computer, partly on the user's computer, as a separate software package, partly on the user's computer, partly on a remote computer, or entirely on the remote computer or server.

A program/utility 914 having a set (at least one) of program modules 9140 may be stored in, for example, the system memory 910. The program modules 9140 include but are not limited to, an operating system, one or more application programs, other programs modules, and program data. Each of these examples, or some combination thereof, may include an implementation of a network environment. The program modules 9140 generally perform the functions and/or methods in the embodiments described herein.

The computer device 90 may also communicate with one or more external devices 10 (such as, a keyboard, a pointing device, a display 100, etc.). Furthermore, the computer device 90 may also communicate with one or more communication devices enabling a user to interact with the computer device 90 and/or other devices (such as a network card, modem, etc.) enabling the computer device 90 to communicate with one or more computer devices. This communication can be performed via the input/output (I/O) interface 902. Also, the computer device 90 may communicate with one or more networks (such as a local area network (hereafter referred to as LAN), a wide area network (hereafter referred to as WAN) and/or a public network such as an Internet) through a network adapter 900. As shown in FIG 8, the network adapter 900 communicates with other modules of the computer device 90 over the bus 908. It should be understood that, although not shown in FIG 8, other hardware and/or software modules may be used in connection with the computer device 90. The hardware and/or software includes, but is not limited to, microcode, device drivers, redundant processing units, external disk drive arrays, RAID systems, tap Drive and data backup storage system.

The processing unit 906 executes various functional applications and the voice control of the electronic device based on an in-vehicle scene by running a program stored in the system memory 910, for example, implementing the voice control method of the electronic device mentioned in the above embodiments.

In order to achieve the above embodiments, the present disclosure further provides a non-transitory computer readable storage medium, storing computer programs thereon, when the computer programs are executed by the processor, the voice control method of the electronic device according to the above embodiments is performed.

In order to achieve the above embodiments, the present disclosure further provides a computer program product, when instructions of the computer program product are executed by the processor, the voice control method of the electronic device according to the above embodiments is performed.

In the description of the present disclosure, reference throughout this specification to "an embodiment," "some embodiments," "example," "a specific example," or "some examples," means that a particular feature, structure, material, or characteristic described in connection with the embodiment or example is included in at least one embodiment or example of the present disclosure. In the specification, the terms mentioned above are not necessarily referring to the same embodiment or example of the present disclosure. Furthermore, the particular features, structures, materials, or characteristics may be combined in any suitable manner in one or more embodiments or examples. Besides, any different embodiments and examples and any different characteristics of embodiments and examples may be combined by those skilled in the art without contradiction.

It should be illustrated that, in descriptions of the present disclosure, terms such as "first" and "second" are used herein for purposes of description and are not construed as indicating or implying relative importance or significance. Furthermore, in the description of the present disclosure, "a plurality of" means two or more than two, unless specified otherwise.

Any procedure or method described in the flow charts or described in any other way herein may be understood to comprise one or more modules, portions or parts for storing executable codes that realize particular logic functions or procedures. Moreover, advantageous embodiments of the present disclosure may include other implementations in which the order of execution is different from that which is depicted or discussed, including executing functions in a substantially simultaneous manner or in an opposite order according to the related functions, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, " the computer readable medium " may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

## Claims

1. A voice control method of an electronic device, comprising:
receiving (101; 201) a first voice command of a user, and entering a non-chat mode according to the first voice command, wherein the non-chat mode is a music mode, a video mode and/or an inquiry mode;
initiating (102, 202) a full-duplex listening state of the electronic device within a predetermined time period after entering the non-chat mode, wherein under the full-duplex listening state the electronic device identifies a first-type voice command, the first-type voice command having no wake-up word;
acquiring (103) the first-type voice command under the full-duplex listening state, and identifying the first-type voice command; displaying the first-type voice command on a display screen of the electronic device;
when the first-type voice command is a preset command, executing (104) the first-type voice command; and
when the first-type voice command is not a preset command, not executing (105) the first-type voice command,
**characterized in that** displaying the first-type voice command on the display screen of the electronic device comprises:
when the first-type voice command is a command related to the non-chat mode, displaying the first-type voice command in a first font color; and
when the first-type voice command is not the command related to the non-chat mode, displaying the first-type voice command in a second font color, in which the first font color is darker than the second font color.

2. The voice control method of claim 1, further comprising:
initiating (202) the full-duplex listening state of the electronic device within a predetermined time period after entering the non-chat mode; and
exiting (206) the full-duplex listening state after the predetermined time period ends.

3. The voice control method of claim 2, after exiting the full-duplex listening state, further comprising:
acquiring (207) a second-type user command, and identifying the second-type user command, the second-type user command having a wake-up word; and
executing the second-type user command.

4. The voice control method of one of claims 1 to 3, wherein acquiring (103) the first-type voice command under the full-duplex listening state comprises:
collecting current voice information, in which the current voice information comprises user voice information and currently played voice information, and the currently played voice information refers to voice information currently played by a speaker of the electronic device;
acquiring the currently played voice information of the electronic device;
separating the user voice information from the current voice information according to the currently played voice information; and
identifying the user voice information to acquire the first-type voice command.

5. The voice control method of claim 2 or one of claims 3 to 4 in combination with claim 2, wherein the predetermined time period is 20-40 seconds.

6. A voice control apparatus of an electronic device, comprising:
a receiving module (401), configured to receive a first voice command of a user and enter a non-chat mode according to the first voice command, wherein the non-chat mode is a music mode, a video mode and/or an inquiry mode;
an initiating module (402), configured to initiate a full-duplex listening state of the electronic device within a predetermined time period after entering the non-chat mode, wherein under the full-duplex listening state the electronic device identifies a first-type voice command, the first-type voice command having no wake-up word;
an acquiring module (403), configured to acquire the first-type voice command under the full-duplex listening state;
an identifying module (404), configured to identify the first-type voice command; a display module (409), configured to display the first-type voice command on a display screen of the electronic device; and
a processing module (405), configured to execute the first-type voice command when the first-type voice command is a preset command, wherein the processing module (405) is further configured to not execute the first-type voice command when the first-type voice command is not a preset command, **characterized in that**:
the display module (409) is specifically configured to:
when the first-type voice command is a command related to the non-chat mode, display the first-type voice command in a first font color, and
when the first-type voice command is not the command related to the non-chat mode, display the first-type voice command in a second font color, in which the first font color is darker than the second font color.

7. The voice control apparatus of claim 6, further comprising:
an exiting module (406), configured to exit the full-duplex listening state after the predetermined time period ends.

8. The voice control apparatus of claim 7, further comprising:
an acquiring and identifying module (407), configured to acquire the second-type user command and identify the second-type user command, the second-type user command having a wake-up word; and
an executing module (408), configured to execute the second-type user command.

9. The voice control apparatus of one of claims 6 to 8, wherein the acquiring module (403) is specifically configured to:
collect current voice information, in which the current voice information comprises user voice information and currently played voice information, and the currently played voice information refers to voice information currently played by a speaker of the electronic device;
acquire the currently played voice information of the electronic device;
separate the user voice information from the current voice information according to the currently played voice information; and
identify the user voice information to acquire the first-type voice command.

10. A non-transitory computer readable storage medium, storing computer programs thereon which, when executed by a processor, cause the processor to perform the voice control method of the electronic device according to any one of claims 1 to 5.

## Patentansprüche

1. Sprachsteuerungsverfahren einer elektronischen Vorrichtung, umfassend:
Empfangen (101; 201) eines ersten Sprachbefehls eines Nutzers und Übergehen in einen Nicht-Gesprächsmodus gemäß dem ersten Sprachbefehl, wobei der Nicht-Gesprächsmodus ein Musikmodus, ein Videomodus und/oder ein Anfragemodus ist;
Initiieren (102, 202) eines Vollduplex-Hörzustand der elektronischen Vorrichtung innerhalb eines vorbestimmten Zeitraums nach dem Übergang in den Nicht-Gesprächsmodus, wobei die elektronische Vorrichtung in dem Vollduplex-Hörzustand einen Sprachbefehl eines ersten Typs identifiziert, wobei der Sprachbefehl des ersten Typs kein Aktivierungswort aufweist;
Erhalten (103) des Sprachbefehls des ersten Typs in dem Vollduplex-Hörzustand und Identifizieren des Sprachbefehls des ersten Typs; Anzeigen des Sprachbefehls des ersten Typs auf einem Anzeigebildschirm der elektronischen Vorrichtung;
wenn der Sprachbefehl des ersten Typs ein voreingestellter Befehl ist, Ausführen (104) des Sprachbefehls des ersten Typs; und
wenn der Sprachbefehl des ersten Typs kein voreingestellter Befehl ist, Nichtausführen (105) des Sprachbefehls des ersten Typs,
**dadurch gekennzeichnet, dass** das Anzeigen des Sprachbefehls des ersten Typs auf dem Anzeigebildschirm der elektronischen Vorrichtung Folgendes umfasst:
wenn der Sprachbefehl des ersten Typs ein Befehl in Bezug auf den Nicht-Gesprächsmodus ist, Anzeigen des Sprachbefehls des ersten Typs in einer ersten Schriftfarbe; und
wenn der Sprachbefehl des ersten Typs nicht der Befehl in Bezug auf den Nicht-Gesprächsmodus ist, Anzeigen des Sprachbefehls des ersten Typs in einer zweiten Schriftfarbe, wobei die erste Schriftfarbe dunkler als die zweite Schriftfarbe ist.

2. Sprachsteuerungsverfahren nach Anspruch 1, des Weiteren umfassend:
Initiieren (202) des Vollduplex-Hörzustands der elektronischen Vorrichtung innerhalb eines vorbestimmten Zeitraums nach dem Übergang in den Nicht-Gesprächsmodus; und
Verlassen (206) des Vollduplex-Hörzustands nach dem Ablauf des vorbestimmten Zeitraums.

3. Sprachsteuerungsverfahren nach Anspruch 2, nach dem Verlassen des Vollduplex-Hörzustands des Weiteren umfassend:
Erhalten (207) eines Nutzerbefehls eines zweiten Typs und Identifizieren des Nutzerbefehls des zweiten Typs, wobei der Nutzerbefehl des zweiten Typs ein Aktivierungswort aufweist; und
Ausführen des Nutzerbefehls des zweiten Typs.

4. Sprachsteuerungsverfahren nach einem der Ansprüche 1 bis 3, wobei das Erhalten (103) des Sprachbefehls des ersten Typs in dem Vollduplex-Hörzustand Folgendes umfasst:
Sammeln aktueller Sprachinformationen, wobei die aktuellen Sprachinformationen Nutzersprachinformationen und aktuell abgespielte Sprachinformationen umfassen und die aktuell abgespielten Sprachinformationen Sprachinformationen bezeichnen, die aktuell über einen Lautsprecher der elektronischen Vorrichtung abgespielt werden;
Erhalten der aktuell abgespielten Sprachinformationen der elektronischen Vorrichtung;
Trennen der Nutzersprachinformationen von den aktuellen Sprachinformationen gemäß den aktuell abgespielten Sprachinformationen; und
Identifizieren der Nutzersprachinformationen zum Erhalten des Sprachbefehls des ersten Typs.

5. Sprachsteuerungsverfahren nach Anspruch 2 oder einem der Ansprüche 3 bis 4 in Kombination mit Anspruch 2, wobei der vorbestimmte Zeitraum 20 bis 40 Sekunden beträgt.

6. Sprachsteuerungseinrichtung einer elektronischen Vorrichtung, umfassend:
ein Empfangsmodul (401) zum Empfangen eines ersten Sprachbefehls eines Nutzers und Übergehen in einen Nicht-Gesprächsmodus gemäß dem ersten Sprachbefehl, wobei der Nicht-Gesprächsmodus ein Musikmodus, ein Videomodus und/oder ein Anfragemodus ist;
ein Initiierungsmodul (402) zum Initiieren eines Vollduplex-Hörzustand der elektronischen Vorrichtung innerhalb eines vorbestimmten Zeitraums nach dem Übergang in den Nicht-Gesprächsmodus, wobei die elektronische Vorrichtung in dem Vollduplex-Hörzustand einen Sprachbefehl eines ersten Typs identifiziert, wobei der Sprachbefehl des ersten Typs kein Aktivierungswort aufweist;
ein Erhaltemodul (403) zum Erhalten des Sprachbefehls des ersten Typs in dem Vollduplex-Hörzustand;
ein Identifizierungsmodul (404) zum Identifizieren des Sprachbefehls des ersten Typs;
ein Anzeigemodulmodul (409) zum Anzeigen des Sprachbefehls des ersten Typs auf einem Anzeigebildschirm der elektronischen Vorrichtung; und
ein Verarbeitungsmodul (405) zum Ausführen der Sprachbefehls des ersten Typs, wenn der Sprachbefehl des ersten Typs ein voreingestellter Befehl ist, wobei das Verarbeitungsmodul (405) des Weiteren dazu eingerichtet ist, den Sprachbefehl des ersten Typs nicht auszuführen, wenn der Sprachbefehl des ersten Typs kein voreingestellter Befehl ist, **dadurch gekennzeichnet, dass**
das Anzeigemodul (409) insbesondere dazu eingerichtet ist:
den Sprachbefehl des ersten Typs in einer ersten Schriftfarbe anzuzeigen, wenn der Sprachbefehl des ersten Typs ein Befehl in Bezug auf den Nicht-Gesprächsmodus ist, und
den Sprachbefehl des ersten Typs in einer zweiten Schriftfarbe anzuzeigen, wenn der Sprachbefehl des ersten Typs nicht der Befehl in Bezug auf den Nicht-Gesprächsmodus ist, wobei die erste Schriftfarbe dunkler als die zweite Schriftfarbe ist.

7. Sprachsteuerungseinrichtung nach Anspruch 6, des Weiteren umfassend:
ein Verlassungsmodul (406) zum Verlassen des Vollduplex-Hörzustands nach dem Ablauf des vorbestimmten Zeitraums.

8. Sprachsteuerungseinrichtung nach Anspruch 7, des Weiteren umfassend:
ein Erhalte- und Identifizierungsmodul (407) zum Erhalten des Nutzerbefehls des zweiten Typs und Identifizieren des Nutzerbefehls des zweiten Typs, wobei der Nutzerbefehls des zweiten Typs ein Aktivierungswort aufweist; und
ein Ausführungsmodul (408) zum Ausführen des Nutzerbefehls des zweiten Typs.

9. Sprachsteuerungseinrichtung nach einem der Ansprüche 6 bis 8, wobei das Erhaltemodul (403) eigens zu Folgendem eingerichtet ist:
Sammeln aktueller Sprachinformationen, wobei die aktuellen Sprachinformationen Nutzersprachinformationen und aktuell abgespielte Sprachinformationen umfassen und die aktuell abgespielten Sprachinformationen Sprachinformationen bezeichnen, die aktuell über einen Lautsprecher der elektronischen Vorrichtung abgespielt werden;
Erhalten der aktuell abgespielten Sprachinformationen der elektronischen Vorrichtung;
Trennen der Nutzersprachinformationen von den aktuellen Sprachinformationen gemäß den aktuell abgespielten Sprachinformationen; und
Identifizieren der Nutzersprachinformationen zum Erhalten des Sprachbefehls des ersten Typs.

10. Nichtflüchtiges computerlesbares Speichermedium, auf dem Computerprogramme gespeichert sind, die bei Ausführung durch einen Prozessor den Prozessor dazu veranlassen, das Sprachsteuerungsverfahren der elektronischen Vorrichtung nach einem der Ansprüche 1 bis 5 durchzuführen.

## Revendications

1. Procédé de commande vocale d'un dispositif électronique, comprenant :
recevoir (101 ; 201) une première commande vocale d'un utilisateur et entrer dans un mode non conversationnel, dans lequel le mode non conversationnel est un mode musique, un mode vidéo et/ou un mode interrogation ;
initier (102, 202) un état d'écoute duplex du dispositif électronique dans une période de temps prédéterminée après l'entrée dans le mode non conversationnel, dans lequel, dans l'état d'écoute duplex, le dispositif électronique identifie une commande vocale de premier type, la commande vocale de premier type n'ayant pas un mot de réveil ;
acquérir (103) la commande vocale de premier type dans l'état d'écoute duplex et identifier la commande vocale de premier type ; afficher la commande vocale de premier type sur un écran d'affichage du dispositif électronique ;
quand la commande vocale de premier type est une commande prédéfinie, exécuter (104) la commande vocale de premier type ; et
quand la commande vocale de premier type n'est pas une commande prédéfinie, ne pas exécuter (105) la commande vocale de premier type,
**caractérisé en ce que** l'affichage de la commande vocale de premier type sur l'écran d'affichage du dispositif électronique comprend :
quand la commande vocale de premier type est une commande liée au mode non conversationnel, afficher la commande vocale de premier type dans une première couleur de police ; et
quand la commande vocale de premier type n'est pas la commande liée au mode non conversationnel, afficher la commande vocale de premier type dans une deuxième couleur de police, dans lequel la première couleur de police est plus foncée que la deuxième couleur de police.

2. Procédé de commande vocale selon la revendication 1, comprenant en outre :
initier (202) l'état d'écoute duplex du dispositif électronique dans une période de temps prédéterminée après l'entrée dans le mode non conversationnel ; et
sortir (206) de l'état d'écoute duplex après la fin de la période de temps prédéterminée.

3. Procédé de commande vocale selon la revendication 2, après la sortie de l'état d'écoute duplex, comprenant en outre :
acquérir (207) une commande d'utilisateur de deuxième type et identifier la commande d'utilisateur de deuxième type, la commande d'utilisateur de deuxième type ayant un mot de réveil ; et
exécuter la commande d'utilisateur de deuxième type.

4. Procédé de commande vocale selon l'une quelconque des revendications 1 à 3, dans lequel l'étape consistant à acquérir (103) la commande vocale de premier type dans l'état d'écoute duplex comprend :
collecter des informations vocales actuelles, dans lequel les informations vocales actuelles comprennent des informations vocales d'utilisateur et des informations vocales actuellement diffusées et les informations actuellement diffusées se réfèrent à des informations vocales actuellement diffusées par un haut-parleur du dispositif électronique ;
acquérir les informations vocales actuellement diffusées du dispositif électronique ;
séparer les informations vocales d'utilisateur des informations vocales actuelles selon les informations vocales actuellement diffusées ; et
identifier les informations vocales d'utilisateur afin d'acquérir la commande vocale de premier type.

5. Procédé de commande vocale selon la revendication 2 ou l'une quelconque des revendications 3 à 4 en combinaison avec la revendication 2, dans lequel la période de temps prédéterminée est de 20 à 40 secondes.

6. Appareil de commande vocale d'un dispositif électronique, comprenant :
un module de réception (401) configuré pour recevoir une première commande vocale d'un utilisateur et entrer dans un mode non conversationnel, dans lequel le mode non conversationnel est un mode musique, un mode vidéo et/ou un mode interrogation ;
un module d'initiation (402) configuré pour initier un état d'écoute duplex du dispositif électronique dans une période de temps prédéterminée après l'entrée dans le mode non conversationnel, dans lequel, dans l'état d'écoute duplex, le dispositif électronique identifie une commande vocale de premier type, la commande vocale de premier type n'ayant pas un mot de réveil ;
un module d'acquise (403) configuré pour acquérir la commande vocale de premier type dans l'état d'écoute duplex ;
un module d'identification (404) configuré pour identifier la commande vocale de premier type ;
un module d'affichage (409) configuré pour afficher la commande vocale de premier type sur un écran d'affichage du dispositif électronique ; et
un module de traitement (405) configuré pour exécuter la commande vocale de premier type quand la commande vocale de premier type est une commande prédéfinie, dans lequel le module de traitement (405) est configuré en outre pour ne pas exécuter la commande vocale de premier type quand la commande vocale de premier type n'est pas une commande prédéfinie, **caractérisé en ce que** :
le module d'affichage (409) est configuré notamment pour :
quand la commande vocale de premier type est une commande liée au mode non conversationnel, afficher la commande vocale de premier type dans une première couleur de police, et
quand la commande vocale de premier type n'est pas la commande liée au mode non conversationnel, afficher la commande vocale de premier type dans une deuxième couleur de police, dans lequel la première couleur de police est plus foncée que la deuxième couleur de police.

7. Appareil de commande vocale selon la revendication 6, comprenant en outre :
un module de sortie (406) configuré pour sortir de l'état d'écoute duplex après la fin de la période de temps prédéterminée.

8. Appareil de commande vocale selon la revendication 7, comprenant en outre :
un module d'acquise et d'identification (407) configuré pour acquérir la commande d'utilisateur de deuxième type et identifier la commande d'utilisateur de deuxième type, la commande d'utilisateur de deuxième type ayant un mot de réveil ; et
un module d'exécution (408) configuré pour exécuter la commande d'utilisateur de deuxième type.

9. Appareil de commande vocale selon l'une quelconque des revendications 6 à 8, dans lequel le module d'acquise (403) est configuré notamment pour :
collecter des informations vocales actuelles, dans lequel les informations vocales actuelles comprennent des informations vocales d'utilisateur et des informations vocales actuellement diffusées et les informations actuellement diffusées se réfèrent à des informations vocales actuellement diffusées par un haut-parleur du dispositif électronique ;
acquérir les informations vocales actuellement diffusées du dispositif électronique ;
séparer les informations vocales d'utilisateur des informations vocales actuelles selon les informations vocales actuellement diffusées ; et
identifier les informations vocales d'utilisateur afin d'acquérir la commande vocale de premier type.

10. Support de stockage non transitoire lisible par ordinateur stockant sur celui-ci des programmes d'ordinateur qui, lorsqu'ils sont exécutés par un processeur, entraînent le processeur à effectuer le procédé de commande vocale du dispositif électronique selon l'une quelconque des revendications 1 à 5.
